# EUROPÄISCHE PATENTSCHRIFT

(11) **EP 2 637 968 B1**
(45) Veröffentlichungstag und Bekanntmachung des Hinweises auf die Patenterteilung: **06.12.2017**
(21) Anmeldenummer: 11779126.9
(22) Anmeldetag: 24.10.2011
(51) Int. Cl.: C01B 33/08, C01B 33/107, C01B 33/04

(54) **VERFAHREN ZUR SELEKTIVEN SPALTUNG HÖHERER SILANE**
PROCESS FOR SELECTIVE CLEAVAGE OF HIGHER SILANES
PROCÉDÉ DE FISSION SÉLECTIVE DE SILANES SUPÉRIEURS

(30) Priorität: 09.11.2010 DE 102010043648
(43) Veröffentlichungstag der Anmeldung: 18.09.2013
(73) Patentinhaber: Evonik Degussa GmbH, 45128 Essen (DE)
(72) Erfinder: MÜH, Ekkehard, 79618 Rheinfelden (DE); RAULEDER, Hartwig, 79618 Rheinfelden (DE)
(86) Internationale Anmeldenummer: PCT/EP2011/068534
(87) Internationale Veröffentlichungsnummer: WO 2012/062560

(56) Entgegenhaltungen:
- EP-A1- 0 610 809
- EP-A1- 0 635 510
- EP-A1- 0 700 920
- EP-A1- 1 505 070
- US-A- 2 709 176

## Beschreibung

Die Erfindung betrifft ein Verfahren zur Herstellung monomerer und/oder dimerer Halogen und/oder Wasserstoff enthaltenden Siliciumverbindungen aus oligomeren anorganischen Silanen mit mindestens drei unmittelbar kovalent miteinander verbundenen Siliciumatomen, deren Substituenten gewählt sind aus Halogen, Wasserstoff und/oder Sauerstoff, indem das oligomere anorganische Silan in Gegenwart von Halogenwasserstoff an einem Stickstoff enthaltenden Katalysator umgesetzt wird.
In der Halbleiter- und Solarindustrie kommen hochreine polykristalline Siliciumverbindungen zum Einsatz. Bei der Herstellung von polykristallinem Silicium entstehen in den verschiedenen Teilprozessen hochsiedende, oligomere Silane bspw. unter anderem auch Oligochlorsilane mit 3- oder 4-Siliciumatomen im Molekül. Zwar weisen diese Oligochlorsilane herstellbedingt eine hohe Reinheit auf, doch haben sie bis heute keine hohe anwendungstechnische Relevanz.
So offenbart die WO 2006/125425 A1 ein zweistufiges Verfahren zu Herstellung von Bulk Silicium aus Halogensilanen. In der ersten Stufe werden bevorzugt Halogensilane, wie Fluor- oder Chlorsilane in Gegenwart von Wasserstoff einer Plasamentladung ausgesetzt. In der sich anschließenden zweiten Stufe wird das aus der ersten Stufe erhalten Polysilangemisch bei Temperaturen ab 400 °C, bevorzugt ab 700 °C zu Silicium pyrolysiert. Bekannt ist die Umwandlung von oligomeren Chlorsilanen in Gegenwart von Tetrachlorsilan zu pyrogener Kieselsäure (DE 10 2006 009953 A1). EP 653 510 A1 offenbart ein Verfahren zur Herstellung monomerer und dimerer Siliciumverbindungen aus einer Mischung umfassend oligomere anorganische Silane, indem die Mischung in Gegenwart von Chlorwasserstoff an einem Aktivkohle, Platin, Zeolith oder AlCl₃ enthaltenden Katalysator umgesetzt wird.

Hexachlordisilan ist als Niedertemperatur-Prekursor sehr interessant, um bspw. Siliciumnitrid-Schichten (SiN) herzustellen.
Aufgabe der vorliegenden Erfindung war es Oligochlorsilane anwendungstechnisch nutzbar zu machen bzw. sie zur Herstellung interessanter Silane, insbesondere niedermolekularer Silane, zu verwenden. Aufgabe der vorliegenden Erfindung war es ferner, ein wirtschaftliches Verfahren breitzustellen, in dem oligomere Siliciumverbindungen in monomere und/oder dimere Silane überführt werden können. Ebenfalls Aufgabe der Erfindung war es, die im Rahmen der Herstellung von polykristallinem Silicium oder anderen Verfahren in denen Halogensilane umgesetzt werden als Nebenprodukte anfallenden reinen Oligochlorsilane in monomere oder dimere Silane zu spalten. Auch höhermolekulare Oligohalogensilane, die mittels der verschiedenen auf Plasmaentladung basierten Verfahren erhalten werden und gegebenenfalls als Nebenprodukt anfallen, sollen in dem erfindungsgemäßen Verfahren eingesetzt werden können.
Gelöst werden die Aufgaben gemäß den unabhängigen Ansprüchen, bevorzugte Ausführungsformen sind in den Unteransprüchen sowie detailliert in der Beschreibung dargelegt.
Überraschend wurde festgestellt, dass Oligohalogensilane unter bestimmten Verfahrensbedingungen in niedermolekulare Halogensilane gespalten werden können, insbesondere bis hin zur dimeren und/oder monomeren Verbindungen. Überraschend war ferner, dass das Verfahren sowohl für oligomere Halogensilane, oligomere Halogenhydrogensilane als auch für oligomere Hydrogensilane, insbesondere gemäß den allgemeinen Formeln II, III und/oder IV, anwendbar ist und in der Regel niedermolekulare Halogenhydrogensilane oder Halogensilane der allgemeinen Formel I erhalten werden. Zur Spaltung der genannten Oligosilane reicht es, überraschend, wenn sie in Gegenwart eines Stickstoff enthaltenden Katalysators mit Halogenwasserstoff, bevorzugt Chlorwasserstoff, in Kontakt gebracht werden. Die Umsetzung wird bei einer Temperatur von 80 bis 120 °C, und bei einem Druck von 10 mbar bis 10 bar, besonders bevorzugt 100 mbar bis 2 bar, insbesondere 0,8 bis 1,2 bar, durchgeführt. Gegenstand der Erfindung ist somit auch ein Verfahren, in dem die monomeren und gegebenenfalls dimeren Siliciumverbindungen der Formel I ohne separate Energiezufuhr, insbesondere ohne Zufuhr thermischer Energie, von den oligomeren Silanen abgetrennt werden können, vorzugsweise destillativ abgetrennt werden können. Verfahrenstechnisch ist es für die Abtrennbarkeit des Umsetzungsproduktes vom Katalysator besonders bevorzugt, wenn der Katalysator eine deutlich höhere Siedetemperatur als die Edukte oder die siedende Reaktionsmischung aufweist bspw. oberhalb 70 °C, besser oberhalb 90 °C, insbesondere > 110 °C, aufweist, fest ist oder die Reaktion heterogen katalysiert wird, d. h. der Stickstoff enthaltende Katalysator ist chemisch auf einen Träger fixiert.

Gegenstand der Erfindung ist somit ein Verfahren zur Herstellung monomerer und/oder dimerer Siliciumverbindungen der allgemeinen Formel I mit X gleich unabhängig Halogen, und insbesondere ist das Halogen unabhängig voneinander ausgewählt aus Chlor, Brom, Jod und Fluor, bevorzugt ist X Chlor, H ist gleich Wasserstoff, n gleich 1 oder 2 und x gleich 0 oder 1 und y gleich 3 oder 4 für n = 1 bzw. 5 oder 6 für n = 2, mit der Maßgabe, dass (y + x) = (2n+2) ist,

SiₙHₓX_{y} (I)

aus einem oligomeren anorganischen Silan oder einer Mischung umfassend oligomere anorganische Silane, wobei ein oligomeres Silan mindestens drei unmittelbar kovalent verbundene Siliciumatome, insbesondere mindestens ein ·Si-Si-Si· Fragment, aufweist und die weiteren Substituenten an den Siliciumatomen ausgewählt sind aus Halogen, Wasserstoff und/oder Sauerstoff, und ggf. umfasst die Mischung auch Hydrolysate der oligomeren Silane, so dass ein Silan oder die Mischung auch Silane mit zusätzlichen Si-OH und/oder Si-O-Si Fragmenten umfassen kann,
- indem das oligomere Silan oder die Mischung in Gegenwart von Halogenwasserstoff an einem Stickstoff enthaltenden Katalysator zu Siliciumverbindungen der allgemeinen Formel I bei 80 bis 120°C und einem Druck von 10 mbar bis 10 bar umgesetzt werden. Beispielhaft kann eine Spaltung von Octachlortrisilan in Gegenwart von HCl und einem Stickstoff enthaltenden Katalysator idealisiert über die folgenden Reaktionsgleichungen widergegeben werden : 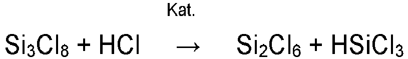 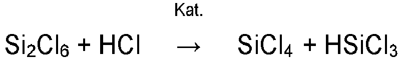 Eine Spaltung von Decachlortetrasilan kann gemäß den nachfolgenden Reaktionsgleichungen widergegeben werden:

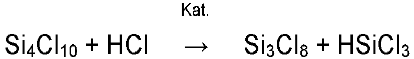

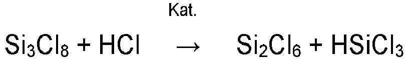

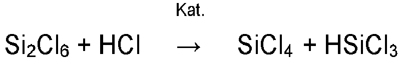

Unter oligomerem anorganischen Silan wird ein Silan mit mindestens drei miteinander kovalent verknüpften Siliciumatomen bis hin zu polymeren anorganischen Silanen verstanden, deren freie Valenzen im Wesentlichen mit Wasserstoff und/oder Halogen abgesättigt sind. Polymere anorganische Silane liegen zäh viskos bis fest vor und weisen mehr als vier, vorzugsweise im Mittel 5 bis 50, insbesondere 9 bis 25 oder auch 8 bis 20 Siliciumatome auf. Gegebenenfalls kann ein solches Silan oder eine Mischung dieser Silane auch Hydrolyse- und ggf. Kondensationsprodukte der Silane umfassen, so dass unter dem Begriff oligomeres anorganisches Silan bzw. Mischungen dieser auch Silane mit Siloxanbindungen und/oder Silanol-Gruppen erfasst werden. Ein besondere Vorteil der Erfindung ist es, dass an das oligomere anorganische Silan für das erfindungsgemäße Verfahren keine besonderen Ansprüche an seine Löslichkeit in einem Lösemittel bestehen. Vorzugsweise sollte das oligomere Silan sich in den Edukten oder in flüssigen oligomeren Silanen lösen oder dispergieren lassen. Durch diese Verfahrensführung kann das in der Regel aus Prozessen mit hochreinen Edukten und Produkten stammende hochreine oligomere Silan wirtschaftlich zu hochreinen Siliciumverbindungen der Formel I gespalten werden. Aufwendige Reinigungsschritte können unterbleiben. Dem Fachmann ist klar, dass bei Spaltung zäher bis fester oligomerer Silane ein Erwärmen der Silane notwendig sein kann, um die Spaltung zu starten und/oder auch um die erhaltenen Siliciumverbindungen vollständig destillativ abzutrennen. Grundsätzlich kann das Verfahren kontinuierlich oder satzweise durchgeführt werden.

In das erfindungsgemäße Verfahren werden vorzugsweise als oligomeres Silan oder als Mischung umfassend oligomere Silane Perhalogensilane, Hydrohalogensilane oder Hydrogensilane, höhere homologe Halogenpolysilane sowie gemischt hydriert halogenierte Polysilane und gegebenenfalls deren Hydrolyseprodukte und/oder Mischungen dieser eingesetzt. Besonders bevorzugt werden im Wesentlichen als Perhalogensilane vorliegende oligomere Silane in das Verfahren eingesetzt, um sie zu Hydrohalogensilanen und Halogensilanen zu spalten. Ferner sind von den oligomeren anorganischen Silanen oder Mischung der oligomeren Silane vorzugsweise die Folgenden oligomeren Silane umfasst: Trisiliciumverbindung, Tetrasilicium-, Pentasilicium-, Hexasilicium-, Heptasilicium-, Octasilicium- Nonasilicium- und/oder, Decasiliciumverbindung und/oder bis zu höheren Polysiliciumverbindung, die jeweils unabhängig als Perhalogensilan, Halogenhydrogensilan-Verbindung oder Hydrogensilan vorliegen können. Weiter können die Silane als Catenasilane, Cyclosilane, und/oder verzweigt oder auch vernetzt vorliegen. Dazu können sie als Polysiliciumdihalogenide, Polysiliciummonohalogene als auch mit einem gewissen Anteil an Wasserstoff vorliegen.

Besonders bevorzugt können in dem erfindungsgemäßen Verfahren Octachlortrisilan, Decachlortetrasilan, Dodecachlorpentasilan, Tetradecahexasilan, Decachlorcyclopentasilan oder eine Mischung enthaltend diese als oligomeres anorganisches Silan eingesetzt werden.

Besonders bevorzugt sind die oligomeren anorganischen Silane ausgewählt aus
- aus linearen oder verzweigten Silanen der allgemeinen Formel II

   SiₘHₐX_{b} (II)

   wobei m, a und b jeweils unabhängig ganze Zahlen sind, mit m größer gleich 3, insbesondere m = 3 bis 100, bevorzugt m = 3 bis 50, besonders bevorzugt m = 3, 4, 5, 6, 7, 8, 9, 10, alternativ bevorzugt ist m = 3 bis 25, vorzugsweise m = 3 bis 20, a gleich 0 oder größer gleich 1 und b gleich 0 oder größer gleich 1 mit der Maßgabe, dass a + b = 2m+2 ist, in bevorzugten Ausführungsformen ist a = 0 oder Wasserstoff ist mit kleiner gleich 4 Gew.-% bis kleiner gleich 2 Gew.-% im Silan vorhanden und/oder
- aus cyclischen, vernetzten und/oder polymeren Silanen der allgemeinen Formel III

   SiₒHₚX_{q} (III),

   vorzugsweise als [SiX₂]ₒ wobei o, p und q jeweils unabhängig ganze Zahlen sind, mit o größer gleich 3, insbesondere o = 3 bis 100, bevorzugt o = 5 bis 50, besonders bevorzugt o = 3, 4, 5, 6, 7, 8, 9, 10, alternativ bevorzugt ist o = 3 bis 25, vorzugsweise o = 3 bis 20; p gleich 0 oder größer gleich 1 und q gleich 0 oder größer gleich 1, wobei p + q = 2o ist, in bevorzugten Ausführungsformen ist p = 0 oder Wasserstoff ist mit kleiner gleich 4 Gew.-% bis kleiner gleich 2 Gew.-% im Silan vorhanden und/oder
- aus polymeren Silanen der allgemeinen Formel IV

   SiᵣHₛXt (IV),

   vorzugsweise als [SiX]ᵣ, wobei r, s und t jeweils unabhängig ganze Zahlen sind mit r größer gleich 3 insbesondere r = 3 bis 100, bevorzugt r = 6 bis 50, besonders bevorzugt r = 6, 7, 8, 9, 10, 11, 12, 13, 14, 15, alternativ bevorzugt ist r = 6 bis 25, vorzugsweise r = 6 bis 20; s gleich 0 oder größer gleich 1 und t gleich 0 oder größer gleich 1, wobei s + t = r ist, in bevorzugten Ausführungsformen ist s = 0 oder Wasserstoff ist mit kleiner gleich 4 Gew.-% bis kleiner gleich 2 Gew.-% im Silan vorhanden und
- mit jeweils unabhängig in Formeln II, III und/oder IV ist X gleich Halogen, wie Chlor, Brom, Fluor, Jod; insbesondere Chlor und/oder Brom, bevorzugt Chlor, und die oligomeren Silane umfassen gegebenenfalls auch Hydrolysate der Silane der Formeln III, IV und/oder IV. Erfindungsgemäß ist X Chlor.

Erhalten werden nach dem erfindungsgemäßen Verfahren Siliciumverbindungen der allgemeinen Formel I mit n = 1 oder 2 und besonders bevorzugt mit X gleich Chlor, SiₙHₓX_{y} (I), wobei besonders bevorzugt bei n = 1, x = 0 für Tetrachlorsilan, x = 1 für Trichlorsilan, x = 2 für Dichlorsilan, x = 3 für Monochlorsilan sind. Für n = 2 ist bevorzugt x = 0 und y = 6 für Hexachlordisilan sowie x = 1 und y = 5 für Pentachlordisilan. Neben diesen bevorzugten, vorwiegend monomeren Verbindungen können aber auch weitere dimere Silane oder Mischungen monomerer und dimerer Verbindungen umfassend Hexachlordisilan, Pentachlorhydrogendisilan oder Tetrachlordihydrogendisilan hergestellt werden. Zudem können bromierte monomere und/oder dimere Silane oder auch entsprechend jodierte oder fluorierte sowie gemischt halogenierte Silane hergestellt werden. Dies sind beispielhaft Hexabromdisilan, Hexajoddisilan, Hexafluordisilan, Tetrabromsilian, Tribromsilan, Dibromsilan, Tetrajodsilan, Trijodsilan, Dijodsilan, Tetrafluorsilan, Trifluorsilan und/oder Difluorsilan die aus den entsprechend bromierten, jodierten oder fluorierten oligomeren Silanen durch Spaltung erhalten werden können.

Generell kann die Siliciumverbindung der allgemeinen Formel I ein Perhalogensilan, eine Halogenhydrogensilan-Verbindung, ein Hydrogensilan sowie auch gemischt halogenierte Silane umfassen. Dies können beispielsweise auch Hexahydrogendisilan, Monosilan oder Mischungen enthaltend diese sein. Ebenso kann die Siliciumverbindung Hexabromdisilan, Pentabromhydrogendisilan, Tetrabromdihydrogendisilan oder eine Mischung enthaltend diese umfassen.

Erfindungsgemäß werden als Siliciumverbindungen der allgemeinen Formel I Hexachlordisilan oder eine Mischung von Hexachlordisilan mit Tetrachlorsilan und/oder Trichlorsilan und gegebenenfalls Dichlorsilan erhalten. Ebenfalls möglicherweis hergestelltes Monochlorsilan und oder Monosilan sind ggf. zusammen mit Dichlorsilan unter gesonderten Bedingungen zu kondensieren. In der Regel werden sie mit dem entweichenden Halogenwasserstoff, wie HCl, aufgrund ihrer Siedepunkte aus der Reaktionsmischung oder einer ungekühlten oder schwach gekühlten (vorzugsweise bei 0 bis -20 °C) Produktvorlage mit ausgetragen.

Der im Verfahren eingesetzte Halogenwasserstoff kann generell als HCl, HBr, HF, HJ oder eine Mischung umfassend mindestens zwei der genannten Halogenwasserstoffe umfassen. Besonders bevorzugt wird der Halogenwasserstoff entsprechend der Substitution der oligomeren Halogensilane im Verfahren eingesetzt. Bei einer Spaltung von oligomeren Chlorsilanen wird vorzugsweise HCl eingesetzt. Die Halogenwasserstoffe können in die oligomeren Silane eingeleitet werden. Dazu kann er in-situ hergestellt, auch verdampft und eingeleitet oder direkt aus einer Gasflasche entnommen werden. Besonders bevorzugt ist der Halogenwasserstoff hochrein und trägt nicht zur Verunreinigung der Spaltprodukte bei.

Gemäß einem weiteren Merkmal des erfindungsgemäßen Verfahrens wird die Verbindung der Formel I oder werden die Verbindungen der Formel I vorteilhaft während der Umsetzung bzw. Spaltungsreaktion destillativ abgetrennt, insbesondere von den oligomeren Silanen. Durch das Abdestillieren der niedermolekularen Spezies wird das Reaktionsgleichgewicht permanent gestört und die Bildung dieser Verbindungen vorteilhaft gefördert. Besonders bevorzugt wird die Verbindung der Formel I kondensiert, weiter bevorzugt werden die unterschiedlichen Verbindungen der Formel I fraktioniert kondensiert.

Weiter wird in dem erfindungsgemäßen Verfahren vorzugsweise als Stickstoff enthaltender Katalysator ein mit organischen Resten funktionalisierter, aminofunktionaliserter Katalysator eingesetzt, insbesondere ein aminoalkylfunktionalisierter Katalysator, der vorzugsweise zudem polymer ist und chemisch an ein Trägermaterial fixiert ist. Alternativ können auch feste unlösliche und/oder höher siedende Stickstoff enthaltende Verbindungen als Katalysator eingesetzt werden. Als Trägermaterial kommen generell alle Materialien in Betracht, die über reaktive Gruppen verfügen, an die die aminofunktionalisierten Katalysatoren angebunden werden können. Vorzugsweise liegt das Trägermaterial in Form eines Formkörpers, wie kugel-, stab- oder partikelförmig vor.

Besonders bevorzugte Stickstoff enthaltende Katalysatoren sind die folgenden und/oder daraus durch Hydrolyse- und/oder Kondensation abgeleiteten Stickstoff enthaltenden Katalysatoren, wie besonders bevorzugt
- eine aminofunktionalisierte Verbindung mit alkylfunktionalisierten sekundären, tertiären- und/oder quartären-Amino-Gruppen, insbesondere ein Aminoalkoxysilan der allgemeinen Formel V oder besonders bevorzugt mindestens ein Hydrolyse- und/der Kondensationsprodukt davon

   (C_{z}H_{2z}+₁O)₃Si(CH₂)_{d}N(C_{g}H_{2g+1})₂ (V)

   mit z = 1 bis 4, g = 1 bis 10, d = 1 bis 3 oder ein daraus abgeleitetes, chemisch an ein Trägermaterial gebundenes, monomeres oder oligomeres Aminosilan, besonders bevorzugt ist in Formel V z = 1 bis 4, insbesondere unabhängig 1 oder 2, unabhängig d = 3 oder 2 und g = 1 bis 18, oder
- ein Kohlenwasserstoff substituiertes Amin der Formeln VI oder VII NHₖR₃₋ₖ (VI) mit k= 0, 1 oder 2 wobei R einem aliphatischen linearen oder verzweigten oder cycloaliphatischen oder aromatischen Kohlenwasserstoff mit 1 bis 20 Kohlenstoffatomen entspricht, wobei die Reste R gleich oder unterschiedlich voneinander sind, vorzugsweise weist R mindestens 2 Kohlenstoffatome auf, oder [NH_{I}R¹_{4-I}]⁺ Z⁻ (VII) mit I = 0, 1, 2 oder 3, wobei R¹ einem aliphatischen linearen oder verzweigten oder cycloaliphatischen oder aromatischen Kohlenwasserstoff mit 1 bis 18 Kohlenstoffatomen entspricht, wobei die Reste R¹ gleich oder unterschiedlich voneinander sind und Z ein Anion ist, vorzugsweise eine Halogenid, vorzugsweise weist R¹ mindestens 2 Kohlenstoffatome auf, oder
- ein Divinylbenzol vernetztes Polystyrol-Harz mit tertiären Amin-Gruppen ist.

Besonders bevorzugt ist ein Katalysator ein Aminoalkoxysilan der allgemeinen Formel V oder ein durch Hydrolyse- und/oder Kondensation erhaltenen Katalysator umfasst, der chemisch an einem Träger fixiert ist, vorzugsweise kovalent an den Träger gebunden ist, insbesondere an einen silikatischen Träger. Erfindungsgemäß ist der Katalysator Diisobutylaminopropyltrimethoxysilan oder eine Hydrolyse- und/oder Kondensationsprodukt davon und wird auf einem silikatischen Trägermaterial eingesetzt. Ferner werden alle Katalysatoren in dem erfindungsgemäßen Verfahren wasserfrei oder im Wesentlichen wasserfrei eingesetzt. Daher werden die Katalysatoren vor ihrer Verwendung in dem Verfahren sorgfältig getrocknet, ohne sie zu zersetzen oder zu inaktivieren.

Ein erfindungsgemäßer Katalysator der Formel V oder dessen Hydrolyse- und oder Kondensationsprodukte weisen vorzugsweise die folgenden Indices auf: z unabhängig 1, 2, 3 oder 4, mit g unabhängig 1, 2, 3, 4, 5, 6, 7, 8, 9 oder 10 und d unabhängig 1, 2 oder 3 oder in daraus abgeleiteten, chemisch auf dem Trägermaterial gebundenen monomeren oder oligomeren Aminosilanen. Dabei kann die Gruppe -(C_{g}H_{2g+1}) der Formel V sowohl unabhängig eine n-Alkyl, iso-Alkyl und/oder auch ein tert-Alkyl-Gruppe sein. Besonders bevorzugte Verbindungen der allgemeinen Formel V sowie daraus abgeleitete, insbesondere chemisch auf ein Trägermaterial gebundene Aminosilane, sind ausgewählt aus der Gruppe: z = 1, d = 3 und g = 1; z = 2, d = 3, g = 1; z = 1, d = 3, g = 2; z = 2, d = 3, g = 2; z = 1, d = 3 und g = 8; z = 2, d = 3, g = 8; z = 1, d = 3, g = 4; z = 2, d = 3, g = 4; z = 1, d = 3, g = 8; z = 2, d = 3, g = 8.

Weitere bevorzugt einsetzbare bzw. verwendbare Katalysatoren für die Herstellung von Monomeren und/oder dimeren Siliciumverbindungen bzw. Silanen als auch für die erfindungsgemäße Verwendung können Amine, Ammoniumsalze, Aminosilane, -siloxane sowie geträgerte Aminosilane, -siloxane sein. Sowie auch Amine der Formel VII mit, in dem das Anion Z beispielsweise einem Halogenid entspricht, wie Fluorid, Chlorid, Bromid, Iodid; oder einem Nitrat, Phosphat, Sulfat, Acetat, Formiat oder Propionat entspricht. Des Weiteren können N-methyl-2-pyrrolidon, Methylimidazole, Tetramethylharnstoff, Tetramethylguanidin, Trimethylsilylimidazol, Benzothiazol, N,N-dimethylacetamid als Katalysatoren verwendet werden. Ferner können auch Mischungen der genannten Katalysatoren eingesetzt werden. Des Weiteren können als Katalysatoren Ionenaustauscher zum Einsatz kommen, z. B. in Form von Katalysatoren basierend auf mit Divinylbenzol vernetztem Polystyrol-Harz mit tertiären Amin-Gruppen, das durch direkte Aminomethylierung eines Styrol-Divinylbenzol-5 Copolymerisats hergestellt wird (DE 100 57 521 A1), auf Feststoffen, die an einem Gerüst aus Polystyrol, vernetzt mit Divinylbenzol, Amino- oder Alkylenamino-Gruppen tragen, beispielsweise Dimethylamino- Gruppen (DE 100 61 680 A1, DE 100 17 168 A1), auf Anionen austauschenden Harzen basierende Katalysatoren mit tertiären Aminogruppen 10 oder quarternären Ammoniumgruppen (DE 33 11 650 A1), aminfunktionalisierten anorganischen Trägern (DE 37 11 444 A1) oder gemäß DE 39 25 357 Organopolysiloxan-Katalysatoren, wie N[(CH₂)₃SiO_{3/2}]₃. Weiter können bevorzugt auch Silane, Siloxane und geträgerte Silane, Siloxane gemäß der DE 37 11 444 im Speziellen gemäß der DE 102007059170.7 zum Einsatz kommen. Zur Durchführung des Verfahrens können besonders bevorzugt als Katalysator auch aminofunktionalisierte, aromatische Polymere mit alkylfunktionalisierten sekundären, tertiären- und/oder quartären Amino-Gruppen eingesetzt werden. Die Alkylgruppen können linear, verzweigt oder cyclisch sein, bevorzugt sind Methyl oder Ethyl. Erfindungsgemäß können aminofunktionalisierte Divinylbenzol-Styrol-Copolymere eingesetzt werden, d. h. Divinylbenzol vernetzte Polystyrol-Harze, wobei die aus der Gruppe der dialkylaminomehtylfunktionalisierten Divinylbenzol-Styrol-Copolymere oder trialkylaminomethylfunktionalisierten Divinylbenzol-Styrol-Copolymere besonders bevorzugt sind, insbesondere mit Alkyl gleich Methyl oder Ethyl, bevorzugt sind dimethyl- oder trimethylaminomethylfunktionalisierte Copolymere. Neben den dimethylaminofunktionalisierten mit Divinylbenzol vernetzten, porösen Polystyrol-Harzen, können auch weitere mit quartären und zugleich gegebenenfalls tertiären Amino-Gruppen funktionalisierte mit Divinylbenzol vernetzte, poröse Polystyrol-Harze zur Behandlung der anorganischen Silane eingesetzt werden.

Als besonders geeignet für das erfindungsgemäße Verfahren erweisen sich mit Divinylbenzol vernetzte Polystyrol-Harze mit tertiären Amino-Gruppen als Prä-Katalysator, wie Amberlyst® A 21 - ein lonenaustauscherharz basierend auf Divinylbenzol vernetztem Polystyrol-Harz mit Dimethylaminomethylen-Gruppen am polymeren Rückgrat des Harzes. Amberlyst® A21 ist ein schwach basisches Anionenaustauscherharz, das als freie Base und in sphärischen Kügelchen mit einem mittleren Durchmesser von etwa 0,49 bis 0,69 mm und einem Wassergehalt von bis zu 54 bis 60 Gew.-% in Bezug auf das Gesamtgewicht erworben werden kann. Die Oberfläche liegt bei etwa 25 m²/g und der mittlere Porendurchmesser bei 400 Angström. Zur Verwendung als Katalysator muss der prä-Katalysator vorsichtig unter Vakuum bei nicht zu hohen Temperaturen, vorzugsweise unter 175 °C, besser unter 130 °C oder bei geringer Temperatur, sorgfältig behandelt werden, um als im Wesentlichen wasserfreier Katalysator eingesetzt werden zu können.
Gemäß einer weiteren bevorzugten Alternative umfasst das Trägermaterial Siliziumoxid umfassende Formkörper. Als Siliziumdioxid umfassende Formkörper werden insbesondere Granulate, Pellets, kugelförmige SiO₂-Formkörper, Raschigringe, Siebplatten oder auch Extrudate oder Strangguss Körper jeglicher Form verstanden. Besonders bevorzugt besteht das Trägermaterial aus SiO₂-Formkörpern, weiter bevorzugt aus kugelförmigen. Weitere bevorzugte Trägermaterialien sind anorganische Materialien, organische Materialine, wie Polymere, oder Kompositmaterialien.

Ebenfalls Gegenstand der Erfindung ist die Verwendung von Halogenwasserstoff und einem Stickstoff enthaltenden Katalysator zur Spaltung von oligomeren anorganischen Silanen, die mindestens drei kovalent unmittelbar miteinander verbundene Siliciumatome, insbesondere ein Silan mit ·Si-Si-Si· Fragment, aufweisen und die Substituenten der Siliciumatome ausgewählt sind aus Halogen, Wasserstoff und/oder Sauerstoff, zu insbesondere monomeren und/oder dimeren Siliciumverbindungen, die vorzugsweise der allgemeinen Formel I entsprechen. Die oligomeren Silane können gegebenenfalls auch in geringem Umfang Hydrolyseprodukte von sich umfassen und dann der Spaltung zugeführt werden. Daher können die monomeren Silane auch Hydroxygruppen aufweisen.

Die Erfindung wird im Folgenden anhand der in den Figuren dargestellten Ausführungsbeispiele näher erläutert. Es stellt dar:

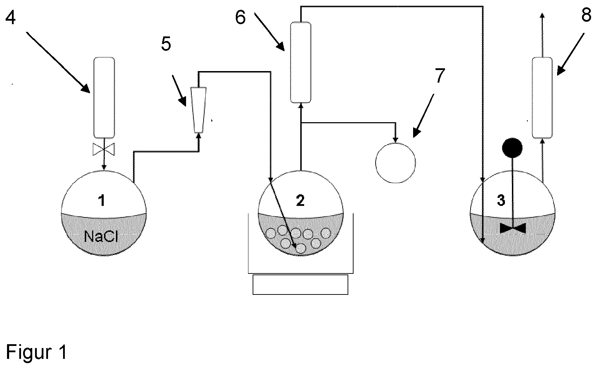

Figur 1: Anlage zur Herstellung monomerer und dimerer Siliciumverbindungen.

### Beispiele:

### Beispiel 1: Spaltung von Octachlortrisilan

Durchführung: 135 g NaCl wurden für die HCl-Herstellung in einem 1-I-Dreihalskolben mit Tropftrichter und Gasableitung vorgelegt (Reaktionsgefäß 1) und 270 ml konz. H₂SO₄ in den Tropftrichter eingefüllt. In einem 2-1-Dreihalskolben mit Rührer Gaseinleitungsrohr und Rückflusskühler (Reaktionsgefäß 3) wurde Natriummethanolatlösung (30 %ig) versetzt mit Indikator (Phenolphtalein) vorgelegt. Dieser Kolben wurde während der gesamten Reaktion eisgekühlt. In einem 250 ml Vierhalskolben mit Gaseinleitungsrohr, Thermometer, Gasableitung und Kolonnenkopf mit Destillatvorlage wurden 24 g der unten beschriebenen Katalysatorkugeln vorgelegt und 72,5 g der Octachlortrisilan enthaltenden Mischung (Zusammensetzung siehe GC Tabelle) zugegeben.

Wie in der Figur 1 dargestellt wurde der Reaktionskolben (2) mittels des Ölbades auf 90 °C erhitzt und die Schwefelsäure auf das Natriumchlorid getropft. Die Tropfgeschwindigkeit wurde so eingestellt, dass sich während der gesamten Versuchsdauer ein konstanter HCl-Fluss von ca. 3I/h ergab. Der gasförmige Chlorwasserstoff wurde mittels eines Gaseinleitungsrohres im unteren Teil des Kolbens durch die Katalysatorkügelchen, die gemäß nachfolgender Synthesevorschrift hergestellt wurden, durchgeleitet. Der Gasstrom wurde über den Rückflusskühler zur Neutralisation in die gekühlte Natriummetanolatlösung eingeleitet. Nach 20 min Reaktionsdauer setzte im Reaktionskolben Rückfluß ein und Flüssigkeit wurde in der Destillationsvorlage aufgefangen. Nach 2 h Reaktionsdauer wurde der Versuch abgebrochen. In der Vorlage hatte sich 6,8 g Destillat angesammelt. Es wurden GC Untersuchungen (Tabelle 1) des Destillats in der Vorlage, der im Reaktionskolben verbleibenden Flüssigkeit (Sumpf) und des Ausgangsmaterial durchgeführt.

**Tabelle 1: GC-Analyse**

| GC-Probe | HSiCl₃ (WLD-%) | SiCl₄ (WLD-%) | Si₂Cl₆ (WLD-%) | Si₃Cl₈ (WLD-%) | Si₄Cl₁₀ (WLD-%) |
|---|---|---|---|---|---|
| Ausgangsprobe | - | - | 4,5 | 86,5 | 6,4 |
| Sumpf | 10,9 | 24,8 | 63,4 | - | - |
| Destillat | 35,1 | 64,9 | - | - | - |

Octachlortrisilan kann in Gegenwart eines geeigneten Katalysators mit HCl zu Trichlorsilan und Siliciumtetrachlorid gespalten werden. Die Reaktion erfolgt über Hexachlordisilan als intermediär stabile Zwischenstufe.

### Beispiel 2: Spaltung von Decachlortetrasilan

Durchführung: 210 g NaCl wurden für die HCl-Herstellung in einem 1-I-Dreihalskolben mit Tropftrichter und Gasableitung vorgelegt (Reaktionsgefäß 1) und 420 ml konz. H₂SO₄ in den Tropftrichter eingefüllt. In einem 2-1-Dreihalskolben mit Rührer Gaseinleitungsrohr und Rückflusskühler (Reaktionsgefäß 3) wurde Natriummethanolatlsg. (30 %ig) versetzt mit Indikator (Phenolphtalein) vorgelegt. Dieser Kolben wurde während der gesamten Reaktion eisgekühlt. In einem 250 ml Vierhalskolben mit Gaseinleitungsrohr, Thermometer, Septum, Gasableitung und Kolonnenkopf mit Destillatvorlage wurden 24 g der unten beschriebenen Katalysatorkugeln, die gemäß nachfolgender Synthesevorschrift hergestellt wurden, vorgelegt und 96,6 g der Decachlortetrasilan enthaltenden Mischung (Zusammensetzung siehe GC Tabelle) zugegeben. Der Reaktionskolben (2), wie in Figur 1 dargestellt, wurde mittels des Ölbades zunächst auf 85 °C nach 1 h auf 95 °C erhitzt und die Schwefelsäure auf das Natriumchlorid getropft. Die Tropfgeschwindigkeit wurde so eingestellt, dass sich während der gesamten Versuchsdauer ein konstanter HCl-Fluss von ca. 2,5 I/h ergab. Der gasförmige Chlorwasserstoff wurde mittels eines Gaseinleitungsrohres im unteren Teil des Kolbens durch die Katalysatorkügelchen durchgeleitet. Der Gasstrom wurde über den Rückflusskühler zur Neutralisation in die gekühlte Natriummetanolatlösung eingeleitet. Nach 2 h Reaktionsdauer setzte im Reaktionskolben sehr schwacher Rückfluss ein. Ab ca. 3 h destillierte langsam Flüssigkeit über und wurden in der Destillationsvorlage aufgefangen. Nach 4 h Reaktionsdauer wurde der Versuch abgebrochen. In der Vorlage hatte sich 6,0 g Destillat angesammelt. Nach 1, 2 und 4 h Reaktionsdauer wurden über das Septum Proben aus dem Reaktionskolben entnommen (Sumpf 1 - 3). Es wurden GC Untersuchungen (Tabelle 2) des Destillats in der Vorlage, der Proben aus dem Reaktionskolben und des Ausgangsmaterial durchgeführt.

**Tabelle 2: GC-Analyse**

| GC-Probe | HSiCl₃ (WLD-%) | SiCl₄ (WLD-%) | Si₂Cl₆ (WLD-%) | Si₃Cl₈ (WLD-%) | Si₄Cl₁₀ (WLD-%) | Höhere Oligomere |
|---|---|---|---|---|---|---|
| Ausgangsprobe | - | - | 0,5 | 3,2 | 81,7 | 12,2 |
| Sumpf 1* | 2,7 | 3,5 | 14,8 | 12,0 | 53,8 | 8,5 |
| Sumpf 2* | 2,3 | 4,6 | 33,0 | 16,7 | 30,4 | 7,4 |
| Sumpf 3* | 4,5 | 9,5 | 46,5 | 9,4 | 15,9 | 5,6 |
| Destillat** | 22,9 | 62,5 | 14,1 | - | - | - |

| | | | | | | |
|---|---|---|---|---|---|---|
| * Bei den Sumpfproben 1-3 treten zwischen den Hauptsignalen Spurensignale auf, die von teilweise hydrierten Chlorsilanoligomerspezies rühren, die ebenfalls während der Abbaureaktion gebildet werden. Dadurch werden die Abweichungen auf 100% erklärt. ** Hexachlordisilan wurde aufgrund des langen, kontinuierlichen Strippens mit HCl trotz deutlich höherer Siedetemperatur anteilig in der Vorlage aufgefangen. | | | | | | |

Decachlortetratrisilan kann in Gegenwart eines geeigneten Katalysators mit HCl zu Trichlorsilan und Siliciumtetrachlorid gespalten werden. Die Reaktion erfolgt über Octachlortrisilan und Hexachlordisilan als intermediär stabilste Zwischenstufe.

### Herstellung des geträgerten Katalysators:

600 g wasserhaltiges Ethanol (H₂O-Gehalt = 5 %) und 54 g 3-Diisobutylaminopropyltrimethoxysilan wurden mit 300 g Katalysator träger (SiO₂ Kugeln, ∅ ca. 5 mm) vorgelegt. Die Reaktionsmischung wurde 5 Stunden bei einer Ölbadtemperatur von 123 bis 128 °C erwärmt. Nach dem Abkühlen wurde die überstehende Flüssigkeit abgesaugt und die Kugeln wurden mit 600 g wasserfreiem Ethanol gewaschen. Nach einer Stunde wurde die Flüssigkeit wieder abgesaugt. Die Kugeln wurden eine Stunde bei einem Druck von 305 bis 35 mbar und einer Badtemperatur von 110 bis 119 °C vorgetrocknet und anschließend 9,5 Stunden bei < 1 mbar getrocknet.

### Bezugszeichenliste:

1 Reaktionsgefäß
2 Reaktionskolben
3 Auffangkolben, Einleitung HCl
4 Tropftrichter
5 Durchflussmesser HCl (Rotameter)
6 Kühler
7 Destillationsvorlage
8 Kühler

## Patentansprüche

1. Verfahren zur Herstellung monomerer und/oder dimerer Siliciumverbindungen der allgemeinen Formel I mit X unabhängig gleich Halogen, n gleich 1 oder 2 und x gleich 0 oder 1 und y gleich 3 oder 4 für n = 1 bzw. 5 oder 6 für n = 2, mit der Maßgabe, dass y + x = 2n+2 ist,
SiₙHₓX_{y} (I),
aus einem oligomeren anorganischen Silan oder einer Mischung umfassend oligomere anorganische Silane, wobei ein oligomeres Silan mindestens drei unmittelbar kovalent verbundene Siliciumatome aufweist und die Substituenten an den Siliciumatomen ausgewählt sind aus Halogen, Wasserstoff und/oder Sauerstoff,
- indem das oligomere Silan oder die Mischung in Gegenwart von Halogenwasserstoff an einem Stickstoff enthaltenden Katalysator zu Siliciumverbindungen der allgemeinen Formel I bei 80 bis 120 °C und einem Druck von 10 mbar bis 10 bar umgesetzt werden.

2. Verfahren nach Anspruch 1,
**dadurch gekennzeichnet,**
**dass** das oligomere Silan oder die Mischung Perhalogensilane, Hydrohalogensilane oder Hydrogensilane und gegebenenfalls deren Hydrolyseprodukte und/oder Mischungen dieser umfasst.

3. Verfahren nach Anspruch 1 oder 2,
**dadurch gekennzeichnet,**
**dass** das oligomere Silan oder die Mischung eine Trisiliciumverbindung, Tetrasiliciumverbindung, Pentasiliciumverbindung, Hexasiliciumverbindung und/oder bis zu Polysiliciumverbindung umfasst.

4. Verfahren nach einem der Ansprüche 1 bis 3,
**dadurch gekennzeichnet,**
**dass** die oligomeren anorganischen Silane ausgewählt sind
- aus linearen oder verzweigten Silanen der allgemeinen Formel II
SiₘHₐX_{b} (II),
wobei m, a und b jeweils unabhängig ganze Zahlen sind mit m größer gleich 3, a gleich 0 oder größer gleich 1 und b gleich 0 oder größer gleich 1 mit der Maßgabe, dass a + b = 2m+2 ist, und/oder
- aus cyclischen, vernetzten und/oder polymeren Silanen der allgemeinen Formel III
SiₒHₚX_{q} (III),
wobei o, p und q jeweils unabhängig ganze Zahlen sind mit o größer gleich 3, insbesondere größer gleich 5, p gleich 0 oder größer gleich 1 und q gleich 0 oder größer gleich 1, wobei p + q = 2o ist, und/oder
- aus polymeren Silanen der allgemeinen Formel IV
SiᵣHₛXₜ (IV),
wobei r, s und t jeweils unabhängig ganze Zahlen sind mit r größer gleich 3, insbesondere größer gleich 6, s gleich 0 oder größer gleich 1 und t gleich 0 oder größer gleich 1, wobei s + t = r ist, und
- mit jeweils unabhängig X gleich Halogen, insbesondere Chlor und/oder Brom, vorzugsweise Chlor, sowie gegebenenfalls aus deren Hydrolysaten.

5. Verfahren nach einem der Ansprüche 1 bis 4,
**dadurch gekennzeichnet,**
**dass** der Halogenwasserstoff Chlorwasserstoff ist.

6. Verfahren nach einem der Ansprüche 1 bis 5,
**dadurch gekennzeichnet,**
**dass** in der Verbindung der allgemeinen Formel I SiₙHₓX_{y} (I) X gleich Chlor ist.

7. Verfahren nach einem der Ansprüche 1 bis 6,
**dadurch gekennzeichnet,**
**dass** die Siliciumverbindungen der allgemeinen Formel I Hexachlordisilan, Pentachlordisilan, Tetrachlorsilan, Trichlorsilan, Monochlorsilan, Dichlorsilan oder eine Mischung dieser umfassen.

8. Verfahren nach einem der Ansprüche 1 bis 7,
**dadurch gekennzeichnet,**
**dass** die Siliciumverbindungen der allgemeinen Formel I Hexachlordisilan oder eine Mischung von Hexachlordisilan mit Tetrachlorsilan und/oder Trichlorsilan und gegebenenfalls Dichlorsilan ist.

9. Verfahren nach einem der Ansprüche 1 bis 8,
**dadurch gekennzeichnet,**
**dass** der Stickstoff enthaltende Katalysator
- eine aminofunktionalisierte Verbindung mit alkylfunktionalisierten sekundären, tertiären- und/oder quartären-Amino-Gruppen umfasst, insbesondere ein Aminoalkoxysilan der allgemeinen Formel V ist, oder mindestens ein Hydrolyse- und/der Kondensationsprodukt davon umfasst
(C_{z}H_{2z+1}O)₃Si(CH₂)_{d}N(C_{g}H_{2g+1})₂ (V)
mit z, g und d jeweils unabhängig ganze Zahlen, mit z gleich 1 bis 4, g gleich 1 bis 10 und d gleich 1 bis 3 sind oder ein daraus abgeleitetes chemisch an ein Trägermaterial gebundenes monomeres oder oligomeres Aminosilan, oder
- ein Kohlenwasserstoff substituiertes Amin der Formeln VI oder VII
NHₖR₃₋ₖ (VI) mit k= 0, 1 oder 2 wobei R einem aliphatischen linearen oder verzweigten oder cycloaliphatischen oder aromatischen Kohlenwasserstoff mit 1 bis 20 Kohlenstoffatomen entspricht, wobei die Reste R gleich oder unterschiedlich voneinander sind, oder
[NHR¹_{4-I}]⁺ Z⁻ (VII) mit I = 0, 1, 2 oder 3, wobei R¹ einem aliphatischen linearen oder verzweigten oder cycloaliphatischen oder aromatischen Kohlenwasserstoff mit 1 bis 18 Kohlenstoffatomen entspricht, wobei die Reste R¹ gleich oder unterschiedlich voneinander sind und Z ein Anion ist, vorzugsweise ein Halogenid, oder
- ein Divinylbenzol vernetztes Polystyrol-Harz mit tertiären Amin-Gruppen ist.

10. Verfahren nach einem der Ansprüche 1 bis 9,
**dadurch gekennzeichnet,**
**dass** der Katalysator chemisch an einem Träger fixiert ist.

11. Verfahren nach einem der Ansprüche 1 bis 10,
**dadurch gekennzeichnet,**
**dass** der Katalysator ein Aminoalkoxysilan der allgemeinen Formel V ist oder mindestens ein Hydrolyse- und/der Kondensationsprodukt davon umfasst und chemisch an einem Träger gebunden ist, insbesondere ist der Katalysator an einen silikatischen Träger gebunden.

12. Verfahren nach einem der Ansprüche 1 bis 11,
**dadurch gekennzeichnet,**
**dass** Octachlortrisilan, Decachlortetrasilan, Dedecachlorpentasilan, Tetradecahexasilan, Decachlorcyclopentasilan oder eine Mischung enthaltend diese als oligomeres anorganisches Silan eingesetzt wird.

13. Verfahren nach einem der Ansprüche 1 bis 12,
**dadurch gekennzeichnet,**
**dass** als Katalysator Diisobutylaminopropyltrimethoxysilan oder eine Hydrolyse- und/oder Kondensationsprodukt davon auf einem silikatischen Trägermaterial eingesetzt wird.

14. Verfahren nach einem der Ansprüche 1 bis 13,
**dadurch gekennzeichnet,**
**dass** die Verbindung der Formel I während der Umsetzung bzw. Spaltungsreaktion destillativ abgetrennt wird.

15. Verwendung von Halogenwasserstoff und einem Stickstoff enthaltenden Katalysator zur Spaltung von oligomeren anorganischen Silanen, die mindestens drei kovalent unmittelbar miteinander verbundene Siliciumatome aufweisen und die Substituenten der Siliciumatome ausgewählt sind aus Halogen, Wasserstoff und/oder Sauerstoff zu monomeren und/oder dimeren Siliciumverbindungen.

## Claims

1. Process for preparing monomeric and/or dimeric silicon compounds of the general formula I where X in each occurrence is independently halogen, n is 1 or 2 and x is 0 or 1 and y is 3 or 4 for n=1 or 5 or 6 for n=2, with the proviso that y + x is = 2n+2,
SiₙHₓX_{y} (I),
from an oligomeric inorganic silane or a mixture comprising oligomeric inorganic silanes, wherein an oligomeric silane has three or more directly covalently connected silicon atoms and the substituents on the silicon atoms are selected from halogen, hydrogen and/or oxygen,
- wherein the oligomeric silane or the mixture is reacted in the presence of hydrogen halide over a nitrogen-containing catalyst at 80 to 120°C and a pressure of 10 mbar to 10 bar to form silicon compounds of the general formula I.

2. Process according to Claim 1, **characterized in that** the oligomeric silane or the mixture comprises perhalosilanes, hydrohalosilanes or hydrogen silanes with or without their hydrolysis products and/or mixtures thereof.

3. Process according to Claim 1 or 2, **characterized in that** the oligomeric silane or the mixture comprises a trisilicon compound, tetrasilicon compound, pentasilicon compound, hexasilicon compound and/or up to polysilicon compound.

4. Process according to any one of Claims 1 to 3, **characterized in that** the oligomeric inorganic silanes are selected
- from linear or branched silanes of the general formula II
SiₘHₐX_{b} (II),
where m, a and b are each independently integers with m not less than 3, a 0 or not less than 1 and b 0 or not less than 1 with the proviso that a + b is = 2m+2, and/or
- from cyclic, crosslinked and/or polymeric silanes of the general formula III
SiₒHₚX_{q} (III),
where o, p and q are each independently integers with o not less than 3 and specifically not less than 5, p 0 or not less than 1 and q 0 or not less than 1, provided that p + q is = 2o, and/or
- from polymeric silanes of the general formula IV
SiᵣHₛXt (IV),
where r, s and t are each independently integers with r not less than 3 and specifically not less than 6, s 0 or not less than 1 and t 0 or not less than 1, provided that s + t is = r, and
- with X in each occurrence independently halogen, specifically chlorine and/or bromine, preferably chlorine, and also, where appropriate, from their hydrolysates.

5. Process according to any one of Claims 1 to 4, **characterized in that** the hydrogen halide is hydrogen chloride.

6. Process according to any one of Claims 1 to 5, **characterized in that** X is chlorine in the compound of the general formula I SiₙHₓX_{y} (I).

7. Process according to any one of Claims 1 to 6, **characterized in that** the silicon compounds of the general formula I comprise hexachlorodisilane, pentachlorodisilane, tetrachlorosilane, trichlorosilane, monochlorosilane, dichlorosilane or a mixture thereof.

8. Process according to any one of Claims 1 to 7, **characterized in that** the silicon compounds of the general formula I are hexachlorodisilane or a mixture of hexachlorodisilane with tetrachlorosilane and/or trichlorosilane with or without dichlorosilane.

9. Process according to any one of Claims 1 to 8, **characterized in that** the nitrogen-containing catalyst comprises
- an amino-functionalized compound having alkyl-functionalized secondary, tertiary and/or quaternary amino groups, specifically an aminoalkoxysilane of the general formula V, or at least one hydrolysis and/or condensation product thereof.
(C_{z}H_{2z+1}O)₃Si(CH₂)_{d}N(C_{g}H_{2g+1})₂ (V)
with z, g and d each independently integers, with z from 1 to 4, g from 1 to 10 and d from 1 to 3, or a monomeric or oligomeric aminosilane derived therefrom and chemically bonded to a support material, or
- a hydrocarbon-substituted amine of formula VI or VII
NHₖR₃₋ₖ (VI) with k= 0, 1 or 2 where R corresponds to an aliphatic linear or branched or cycloaliphatic or aromatic hydrocarbon having 1 to 20 carbon atoms, wherein the R moieties are identical to or different from each other, or
[NH₁R¹₄₋₁]⁺ Z⁻ (VII) with 1 = 0, 1, 2 or 3, where R¹ corresponds to an aliphatic linear or branched or cycloaliphatic or aromatic hydrocarbon having 1 to 18 carbon atoms, wherein the R¹ moieties are identical to or different from each other and Z is an anion, preferably a halide, or
- a divinylbenzene-crosslinked polystyrene resin having tertiary amine groups.

10. Process according to any one of Claims 1 to 9, **characterized in that** the catalyst is chemically fixed to a support.

11. Process according to any one of Claims 1 to 10, **characterized in that** the catalyst is an aminoalkoxysilane of the general formula V or comprises at least one hydrolysis and/or condensation product thereof and is chemically bonded to a support, specifically the catalyst is bonded to a silicatic support.

12. Process according to any one of Claims 1 to 11, **characterized in that** octachlorotrisilane, decachlorotetrasilane, dodecachloropentasilane, tetradecahexasilane, decachlorocyclopentasilane or a mixture containing these is used as oligomeric inorganic silane.

13. Process according to any one of Claims 1 to 12, **characterized in that** the catalyst used is diisobutylaminopropyltrimethoxysilane or a hydrolysis and/or condensation product thereof on a silicatic support material.

14. Process according to any one of Claims 1 to 13, **characterized in that** the compound of formula I is distillatively removed during the splitting reaction.

15. Use of hydrogen halide and of a nitrogen-containing catalyst for splitting oligomeric inorganic silanes which have three or more covalently directly interconnected silicon atoms and the substituents on the silicon atoms are selected from halogen, hydrogen and/or oxygen, to form monomeric and/or dimeric silicon compounds.

## Revendications

1. Procédé pour la préparation de composés siliciés monomères et/ou dimères de formule générale I, dans laquelle X représente, indépendamment, halogène, n vaut 1 ou 2 et x vaut 0 ou 1 et y vaut 3 ou 4 pour n = 1 ou, selon le cas, 5 ou 6 pour n = 2, sous réserve que y + x = 2n + 2,
SiₙHₓX_{y} (I),
à partir d'un silane oligomère inorganique ou d'un mélange comprenant des silanes oligomères inorganiques, un silane oligomère présentant au moins trois atomes de silicium liés directement par covalence et les substituants sur les atomes de silicium étant choisis parmi halogène, hydrogène et/ou oxygène,
- en ce que le silane oligomère ou le mélange est transformé en présence d'un acide halogénohydrique sur un catalyseur contenant de l'azote en composés siliciés de formule générale I à 80 jusqu'à 120 °C et à une pression de 10 mbars jusqu'à 10 bars.

2. Procédé selon la revendication 1, **caractérisé en ce que** le silane oligomère ou le mélange comprend des perhalogénosilanes, des hydrogénohalogénosilanes ou des hydrogénosilanes et le cas échéant leurs produits d'hydrolyse et/ou des mélanges de ceux-ci.

3. Procédé selon la revendication 1 ou 2, **caractérisé en ce que** le silane oligomère ou le mélange comprend un composé trisilicique, tétrasilicique, pentasilicique, hexasilicique et/ou jusqu'à un composé polysilicique.

4. Procédé selon l'une quelconque des revendications 1 à 3, **caractérisé en ce que** les silanes oligomères inorganiques sont choisis parmi
- les silanes linéaires ou ramifiés de formule générale II
SiₘHₐX_{b} (II),
dans laquelle m, a et b représentent, à chaque fois indépendamment, des nombres entiers, m étant supérieur ou égal à 3, a valant 0 ou étant supérieur ou égal à 1 et b valant 0 ou étant supérieur ou égal à 1, sous réserve que a + b = 2m + 2, et/ou
- les silanes cycliques, réticulés et/ou polymères de formule générale III
SiₒHₚX_{q} (III),
dans laquelle o, p et q représentent, à chaque fois indépendamment, des nombres entiers, o étant supérieur ou égal à 3, en particulier supérieur ou égal à 5, p valant 0 ou étant supérieur ou égal à 1 et q valant 0 ou étant supérieur ou égal à 1, p + q = 2o, et/ou
- les silanes polymères de formule générale IV
SiᵣHₛXt (IV),
dans laquelle r, s et t représentent, à chaque fois indépendamment, des nombres entiers, r étant supérieur ou égal à 3, en particulier supérieur ou égal à 6, s valant 0 ou étant supérieur ou égal à 1 et t valant 0 ou étant supérieur ou égal à 1, s + t = r, et
- X représentant, à chaque fois indépendamment, halogène, en particulier chlore et/ou brome, de préférence chlore, ainsi que le cas échéant parmi leurs hydrolysats.

5. Procédé selon l'une quelconque des revendications 1 à 4, **caractérisé en ce que** l'acide halogénohydrique est l'acide chlorhydrique.

6. Procédé selon l'une quelconque des revendications 1 à 5, **caractérisé en ce que**, dans le composé de formule générale I, SiₙHₓX_{y} (I), X représente chlore.

7. Procédé selon l'une quelconque des revendications 1 à 6, **caractérisé en ce que** les composés siliciés de formule générale I comprennent l'hexachlorodisilane, le pentachlorodisilane, le tétrachlorosilane, le trichlorosilane, le monochlorosilane, le dichlorosilane ou un mélange de ceux-ci.

8. Procédé selon l'une quelconque des revendications 1 à 7, **caractérisé en ce que** les composés siliciés de formule générale I sont l'hexachlorodisilane ou un mélange d'hexachlorodisilane avec du tétrachlorosilane et/ou du trichlorosilane, le cas échéant du dichlorosilane.

9. Procédé selon l'une quelconque des revendications 1 à 8, **caractérisé en ce que** le catalyseur contenant de l'azote
- comprend un composé fonctionnalisé par amino présentant des groupes amino secondaire, tertiaire et/ou quaternaire fonctionnalisé par alkyle, représente en particulier un aminoalcoxysilane de formule générale V, ou comprend au moins un produit d'hydrolyse et/ou de condensation de celui-ci
(C_{z}H_{2z+1}O)₃Si(CH₂)_{d}N(C_{g}H_{2g+1})₂ (V)
dans laquelle z, g et d représentent, à chaque fois indépendamment, des nombres entiers, z valant 1 à 4, g valant 1 à 10 et d valant 1 à 3 ou un aminosilane monomère ou oligomère dérivé de celui-ci, lié chimiquement à un matériau support, ou
- une amine substituée par un hydrocarbure des formules VI ou VII
NHₖR₃₋ₖ (VI) dans laquelle k = 0, 1 ou 2, R correspondant à un hydrocarbure aliphatique, linéaire ou ramifié ou cycloaliphatique ou aromatique, comprenant 1 à 20 atomes de carbone, les radicaux R étant identiques ou différents les uns des autres, ou
[NH₁R¹₄₋₁]⁺Z⁻ (VII) dans laquelle 1 = 0, 1, 2 ou 3, R¹ correspondant à un hydrocarbure aliphatique, linéaire ou ramifié ou cycloaliphatique ou aromatique, comprenant 1 à 18 atomes de carbone, les radicaux R¹ étant identiques ou différents les uns des autres et Z représentant un anion, de préférence un halogénure, ou
- une résine de polystyrène réticulée par divinylbenzène, présentant des groupes amine tertiaire.

10. Procédé selon l'une quelconque des revendications 1 à 9, **caractérisé en ce que** le catalyseur est fixé chimiquement à un support.

11. Procédé selon l'une quelconque des revendications 1 à 10, **caractérisé en ce que** le catalyseur est un aminoalcoxysilane de formule générale V ou comprend au moins un produit d'hydrolyse et/ou de condensation de celui-ci et est lié chimiquement à un support, le catalyseur étant en particulier lié à un support silicaté.

12. Procédé selon l'une quelconque des revendications 1 à 11, **caractérisé en ce qu'**on utilise de l'octachlorotrisilane, du décachlorotétrasilane, du dodécachloropentasilane, du tétradécahexasilane, du décachlorocyclopentasilane ou un mélange les contenant comme silane oligomère inorganique.

13. Procédé selon l'une quelconque des revendications 1 à 12, **caractérisé en ce qu'**on utilise comme catalyseur du diisobutylaminopropyltriméthoxysilane ou un produit d'hydrolyse et/ou de condensation de celui-ci sur un matériau support silicaté.

14. Procédé selon l'une quelconque des revendications 1 à 13, **caractérisé en ce que** le composé de formule I est séparé par distillation pendant la transformation ou la réaction de dissociation.

15. Utilisation d'un acide halogénohydrique et d'un catalyseur contenant de l'azote pour la dissociation de silanes oligomères inorganiques, qui présentent au moins trois atomes de silicium reliés directement les uns aux autres et les substituants des atomes de silicium étant choisis parmi halogène, hydrogène et/ou oxygène, en composés siliciés monomères et/ou dimères.
